Europäisches Patentamt

(19) European Patent Office

Office européen des brevets

(11) Veröffentlichungsnummer: **0 281 813**
**B1**

# (12) EUROPÄISCHE PATENTSCHRIFT

(45) Veröffentlichungstag der Patentschrift:
29.08.90

(21) Anmeldenummer: 88102380.8

(22) Anmeldetag: 18.02.88

(51) Int. Cl.⁵: **A61C 1/16**

(54) Hülse für ein medizinisches, insbesondere zahnmedizinisches, Instrument.

(30) Priorität: 26.02.87 DE 3706261

(43) Veröffentlichungstag der Anmeldung:
14.09.88 Patentblatt 88/37

(45) Bekanntmachung des Hinweises auf die Patenterteilung:
29.08.90 Patentblatt 90/35

(84) Benannte Vertragsstaaten:
AT CH DE FR IT LI

(56) Entgegenhaltungen:
GB-A- 2 029 232
US-A- 4 007 529
US-A- 4 332 562

MACHINERY AND PRODUCTION ENGINEERING,
Band 128, Nr. 3316, 30. Juni 1976, Seiten 618-621; B.C.
KELLOCK: "Superplastic forming"

(73) Patentinhaber: Siemens Aktiengesellschaft,
Wittelsbacherplatz 2, D-8000 München 2(DE)

(72) Erfinder: Stralhammer, Reinhard, Hambacher Tal 1,
D-6148 Heppenheim(DE)
Erfinder: Schuss, Werner, Vom-Erthal-Strasse 44,
D-6148 Heppenheim(DE)

## Beschreibung

Medizinische, insbesondere zahnmedizinische, Instrumente, wie Bohr-, Schleif-, Spritz- od. dgl. Handstücke, bedingen, sei es aus funktions- oder handhabungstechnischen Gründen oder sei es aus formgestalterischen Gründen, eine von der zylindrischen Form unter Umständen sehr stark abweichende Formgebung. So sind zahnärztliche Turbinenhandstücke oder sogenannte Hand- und Winkelstücke zum werkzeugseitigen Ende hin meist stark verjüngt ausgebildet. Darüber hinaus sind sie auch nicht rotationssymmetrisch, sondern weisen im Griffbereich einen sogenannten Kontraknick auf. Eine solche "geknickte" Außenkontur hat man bisher entweder dadurch erzielt, daß man zwei (oder mehr) rotationssymmetrische Hülsen in dem gewünschten Winkel miteinander verbunden, z.B. miteinander verschraubt, hat (US-PS 4 007 529) oder indem man die gewünschte gebogene Kontur aus dem Vollen, also aus einer Hülse mit entsprechend starker Wandstärke, herausgefräst hat (US-4 332 562). Letztere Fertigungsart ist zwar vergleichsweise materialverbrauchsintensiv; der Vorteil liegt jedoch darin, daß man die Hülse im Bereich der Knickstelle nicht zu zweiteilen braucht und der Knick insgesamt weicher gestaltet und das Handstück insgesamt damit in der Kontur harmonischer gestaltet werden kann.

Eine ebenfalls bekannte, bei Turbinenhandstücken angewandte Methode, ein im Durchmesser gleichbleibendes zylindrisches Rohr entsprechend dem gewünschten "Knick" zu biegen, ist nur für jene Instrumente geeignet, die in ihrem Inneren keine mit Passungen bzw. Toleranzen behaftete Teile, wie Triebwellen und deren Lager, aufnehmen müssen. Weiterhin sind Abstufungen im Außen durchmesser nur durch Aneinanderfügen von im Durchmesser unterschiedlichen Rohren oder durch das oben erwähnte Herausfräsen aus dem Vollen möglich.

Bei Instrumenten mit nicht rotationssymmetrischen Konturen, z.B. bei Spritzhandstücken, ist es ferner bekannt, die Griffhülse nach dem Tiefziehverfahren aus zwei durch Längsteilung gebildeten Halbschalen zu fertigen. Eine solche, nach dem Tiefziehverfahren erstellte Hülse gestattet nur einfache Konturen vorzusehen, läßt dagegen keine Konturen mit prägnanten Außenkanten zu. Hinzu kommt, daß der Fertigungsaufwand relativ hoch ist, um exakt passende Halbschalen zu bekommen. So ist, wegen der hohen Pressdrücke der apparative Aufwand vergleichsweise hoch, außerdem sind zusätzliche Kalibriereinrichtungen erforderlich. Es ist auch bekannt, siehe z.B. GB-A 2 029 232, diese Art von Griffhülse aus Kunstharz herzustellen.

Der im Anspruch 1 angegebenen Erfindung liegt die Aufgabe zugrunde, demgegenüber eine Verbesserung zu schaffen und eine Hülse der eingangs genannten Gattung anzugeben, die in bezug auf die Außenkontur, und zwar sowohl hinsichtlich Durchmesser, Querschnittsform und Formgebung im Längsschnitt, weitgehend gestaltungsfrei ist, insbesondere prägnante Außenkanten zuläßt und die nicht an eine material- und vorrichtungsaufwendige Fertigung gebunden ist.

Die gemäß der Erfindung aus einem nach der superplastischen Verformung erstellte Hülse kann in nahezu jeder beliebigen Form, und zwar hinsichtlich Durchmesser, Querschnitts- oder Längsschnittsform, hergestellt werden. Sie kann vorteilhafterweise aus zwei Halbschalen oder aus einem etwa rohrförmig vorgebogenem gerollten Blech erstellt werden. Besonders vorteilhaft ist es, als Ausgangsmaterial bereits ein für superplastische Verformung geeignetes, nahtlos gezogenes Rohr zu verwenden.

Die Hülse beinhaltet vorteilhafterweise keine Führungs- und Halteteile für Medienleitungen; diese sind vielmehr Bestandteil eines separaten Grundkörpers des Instruments, auf dem die Hülse aufgeschoben wird.

Insbesondere für die Herstellung von Außenhülsen von zahnärztlichen, motorgetriebenen Handinstrumenten ist es vorteilhaft, die Hülse einteilig, den Antrieb übergreifend auszubilden. Enthält ein solches Handinstrument mehrere, axial hintereinanderliegende Hülsen, so ist es vorteilhaft, den Hülsenrohling einstückig auszubilden und nach Beendigung des Verformungsvorganges die einzelnen Hülsen vom Hülsenrohling zu trennen. Eine besonders vorteilhafte Fertigung läßt sich erzielen, wenn mehrere solcher ein oder mehrere Einzelhülsen beinhaltende Hülsenrohlinge zusammenhängend hintereinander in einer wiederkehrenden Folge aus dem Rohrausgangsmaterial hergestellt werden. In einem Fertigungsprozeß können so mehrere Hülsen gleichzeitig hergestellt werden.

Ein Ausführungsbeispiel der Erfindung wird nachfolgend anhand der Zeichnung näher erläutert. Es zeigen:

Figur 1 ein komplettes zahnärztliches Handinstrument in schaubildlicher Darstellung,
Figuren 2 und 3 Querschnitte entlang der Linien II–II und III–III in Figur 1,
Figur 4 einen kompletten Hülsenrohling,
Figur 5 Teilhülsen aus dem Hülsenrohling nach Figur 4,
Figur 6 eine weitere Ausführungsform eines Hülsenrohlinges.

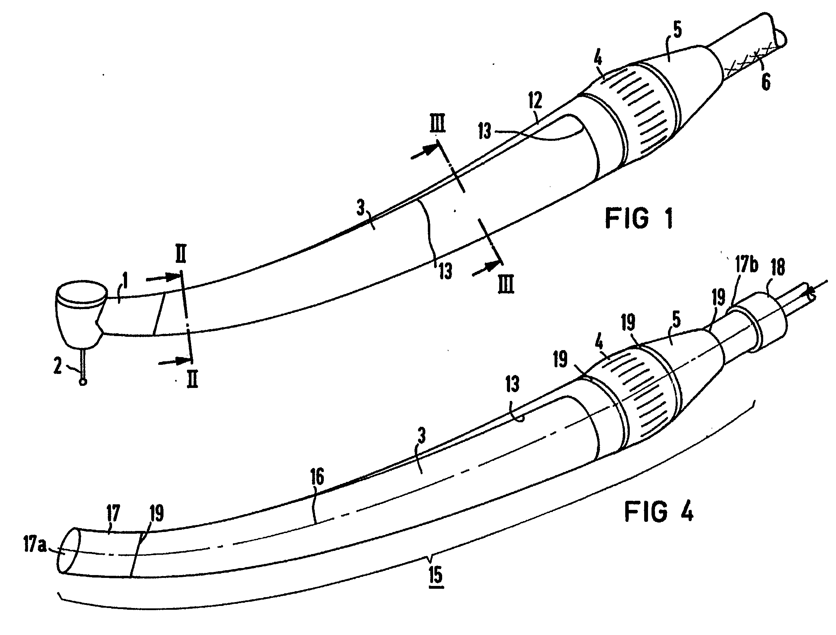

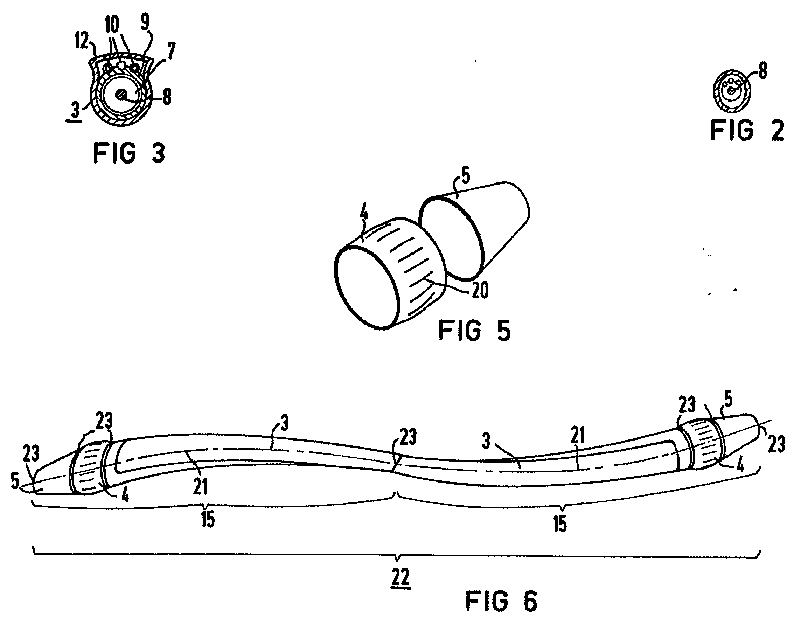

Die Figur 1 zeigt in einer schaubildlichen Darstellung ein komplettes zahnärztliches Handinstrument, in der Fachsprache auch als Hand- und Winkelstück bezeichnet. Das Handinstrument setzt sich im wesentlichen zusammen aus einem Kopfteil 1, in dem ein Werkzeug 2 drehbar gelagert ist, einer Griffhülse 3, einer Hülse 4, die Teil eine Sprayregeleinrichtung ist, und einer Hülse 5, die Teil einer Anschlußarmatur für den Anschluß eines Versorgungsschlauches 6 ist. Bei dem Handinstrument handelt es sich um ein Instrument, welches in seinem Inneren einen Antrieb aufnimmt. Im vorliegenden Ausführungsbeispiel ist, wie aus der Querschnittsdarstellung gemäß Figur 3 hervorgeht, im rückwärtigen Teil der Griffhülse 3 ein Antriebsmotor 7 (Elektro- oder Luftmotor) vorgesehen, dessen Triebwelle 8 in bekannter Weise in ein oder mehreren Abschnitten bis zum Kopfteil 1 geführt ist. Zur Aufnahme der Triebwellenabschnitte und deren Lager ist ein Grundkörper 9 vorgesehen, an dessen Peripherie diverse Luft, Wasser und Licht übertragende Leitungen, in der Querschnittsdarstellung gemäß Figur 3 allgemein mit 10 bezeichnet, befestigt sind.

Die lediglich die äußere Umhüllung des Handinstruments bildende Griffhülse 3 hat, wie aus der Querschnittsdarstellung gemäß Figur 2 und 3 hervorgeht, über die gesamte Länge gesehen sowohl unterschiedliche Außendurchmesser als auch unterschiedliche Querschnittsformen; während der Querschnitt im Bereich der Linie II–II nahezu kreisförmig ist, so weicht er im Bereich der Linie III–III stark von der Kreisform ab. Die Griffhülse bildet im oberen Teil einen mit 12 bezeichneten Sattel, der sowohl zum Kopfteil 1 als auch zur Sprayregelhülse 4 hin in die nahezu kreisförmige Kontur übergeht. Der Übergang des Sattels 12 in die sonst etwa kreisförmige Kontur der Griffhülse 3 bildet bewußt deutlich geprägte Konturenkanten 13, die dem Handstück ein optisch deutlich hervortretendes gutes Aussehen geben.

Die Anschlußarmaturhülse 5 umschließt in bekannter Weise die eigentliche, in der Figur nicht dargestellte Anschlußarmatur, über welche vom Versorgungsschlauch 6 ankommende Versorgungsleitungen für Luft, Wasser und elektrischen Strom an das Handstück herangeführt werden. Ebenso enthält die Sprayregelhülse 4 in ihrem Inneren einen die Medien durchführenden und eine Mischkammer bildenden Körper, der einerseits mit der Anschlußarmatur, welche durch die Hülse 5 überdeckt ist, und andererseits mit einem nicht dargestellten Körper, welcher durch die Griffhülse 3 bedeckt ist, verbunden ist. Die Sprayregelhülse 4 ist gegenüber der Hülse 5 und auch gegenüber der Griffhülse 3 drehbar, wobei bei Drehung ein Mischventil für die Anteile von Luft und Wasser betätigt wird. Kopfteil 1 und Griffhülse 3 können zusammen gegenüber dem Versorgungsschlauch 6 gedreht werden, wozu in bekannter Weise eine entsprechende Drehkupplung vorgesehen ist. Nachdem diese Teile nicht Gegenstand der Erfindung sind, wird der besseren Übersichtlichkeit wegen davon abgesehen, diese Teile näher darzustellen.

Davon ausgehend, daß Griffhülse 3, Sprayregelhülse 4 und Anschlußarmaturhülse 5 im montierten Zustand drei voneinander getrennte Hülsen sind, so werden diese in der Gestaltung unterschiedlichen Hülsen in vorteilhafter Weise aus einem gemeinsamen Hülsenrohling gefertigt, der in Figur 4 in schaubildlicher Darstellung gezeigt ist. Der allgemein mit 15 bezeichnete Hülsenrohling enthält die Griffhülse 3, die Sprayregelhülse 4 und die Anschlußarmaturhülse 5. Ausgangsmaterial ist ein dem späteren "Kontraknick" entsprechend der strichpunktierten Linie 16 vorgebogenes, nahtlos gezogenes Rohr 17 aus einem für eine superplastische Verformung geeigneten Material. Hierfür ist vorteilhafterweise eine Titanlegierung der Spezifikation Ti 3 Al 2,5 V oder Ti Al 6 V 4 vorgesehen, welche einerseits für eine solche Verformung, andererseits wegen der Temperatur- und Medikamentenbeständigkeit für den medizinischen Anwendungsbereich besonders gut geeignet ist.

Das vorgebogene, nahtlos gezogene Ausgangsrohr 17 wird in ein der Form der Hülsen 3, 4 und 5 entsprechendes Gesenk aus einem extrem hitzebeständigem Material eingelegt. Das eine Rohrende 17a wird verschlossen, an das andere Rohrende 17b wird ein Druckanschluß 18 angesetzt, über den Gas mit einem bestimmten Druck dann eingegeben wird, wenn das im Gesenk befindliche Rohr so weit erhitzt ist, daß es unter Druck verformbar ist. Nach Verformung und Erkaltung wird der Hülsenrohling 15 an den mit 19 bezeichneten Trennstellen abgetrennt; die drei Hülsen 3, 4 und 5 liegen sodann im endfertigen Zustand vor (Fig. 5). Im Ausführungsbeispiel hat die Hülse 4 an ihren beiden Enden kreisförmigen Querschnitt, während sie in der Mitte eine mit Vertiefungen oder Erhöhungen versehene Ausbauchung 20 aufweist, die für eine Betätigung der Hülse besonders günstig ist. Die Anschlußarmaturhülse 5 ist kegelförmig ausgebildet.

Die Figur 6 zeigt eine besonders vorteilhafte Fertigung mehrerer, in einer wiederkehrenden Folge aneinandergereihter Hülsen in einem Arbeitsgang. Auch hier wird als Ausgangsmaterial ein für eine superplastische Verformung geeignetes Rohr vorgesehen, welches entsprechend dem strichpunktierten Linienverlauf 21 vorgebogen ist. Das Gesenk, in dem das Rohr eingelegt wird, ist hier so ausgebildet, daß der Rohling 22 praktisch zwei der in Figur 4 dargestellten Hülsenrohlingen 25 entspricht, die mit ihren einen, den kleinsten Durchmessern entsprechenden Enden aneinanderstoßend in der vorerwähnten Weise gefertigt werden können. Nach Abtrennen an den mit 23 bezeichneten Stellen werden so Hülsen für zwei Instrumente, wie in Figur 1 dargestellt, geschaffen. Dadurch, daß das Hülsenmaterial im plastischen Verformungszustand unter Druck gegen die Konturen des Gesenkes gedrückt wird, läßt sich mit einem Arbeitsgang eine einwandfreie Oberflächengestaltung erzielen, die keine Nachbearbeitung erfordert.

## Patentansprüche

1. Hülse für ein medizinisches, insbesondere zahnmedizinisches, Instrument, welche in Längsrichtung gesehen eine vom Querschnitt und/oder vom Außendurchmesser und/oder von der Rotationssymmetrie abweichende Formgebung aufweist, dadurch gekennzeichnet, daß sie (3, 4, 5) aus einem für superplastische Verformung geeigneten Material gebildet ist.

2. Hülse nach Anspruch 1, dadurch gekennzeichnet, daß sie (3, 4, 5) aus einem rohrförmig vorgebogenem gerollten Blech gebildet ist.

3. Hülse nach Anspruch 1, dadurch gekennzeichnet, daß als Ausgangsmaterial ein für superplastische Verformung geeignetes, nahtlos gezogenes Rohr (15) vorgesehen ist.

4. Hülse nach Anspruch 2 oder 3, dadurch gekennzeichnet, daß das Ausgangsmaterial entsprechend der Kontur der Hülse (3, 4, 5) im Endzustand in Längsrichtung vorgebogen ist.

5. Hülse nach Anspruch 1, dadurch gekennzeichnet, daß sie (3, 4, 5) eine im Verhältnis einer Änderung des Außendurchmessers umgekehrt proportionale Wandstärke aufweist.

6. Hülse nach Anspruch 5, dadurch gekennzeichnet, daß als Ausgangsmaterial ein Rohr (15) verwendet ist, dessen Außendurchmesser dem kleinsten Außendurchmesser der Hülse (3, 4, 5) im Endzustand entspricht.

7. Hülse nach Anspruch 1, dadurch gekennzeichnet, daß sie aus einem Hülsenrohling (15) ge bildet ist, der als Endprodukt mehrere, axial hintereinanderliegende und aneinandergrenzende Einzelhülsen (3, 4, 5) enthält, welche nach Beendigung der Verformung an die Hülsenlängen bestimmenden Trennstellen (19, 23) vom Hülsenrohling (15) getrennt werden.

8. Hülse nach Anspruch 7, dadurch gekennzeichnet, daß sie aus einem Hülsenrohling (22) gebildet ist, der die Einzelhülsen (3, 4, 5) in einer wiederkehrenden Folge (Fig. 6) beinhaltet.

9. Hülse nach einem der Ansprüche 1 bis 8, dadurch gekennzeichnet, daß das Ausgangsmaterial eine Titan-Legierung, vorzugsweise Ti 3 Al 2,5 V, ist.

## Claims

1. Sleeve for a medical, more particularly dental instrument, which, seen in longitudinal direction, has a shaping deviating in cross section and/or in outer diameter and/or in rotational symmetry, characterised in that it (3, 4, 5) is formed from a material suitable for superplastic deformation.

2. Sleeve according to claim 1, characterised in that it (3, 4, 5) is formed from a rolled sheet prebent in a tubular manner.

3. Sleeve according to claim 1, characterised in that as starting material there is provided a tube (15), suitable for superplastic deformation and drawn in a seamless manner.

4. Sleeve according to claim 2 or 3, characterised in that the starting material is pre-bent corresponding to the contour of the sleeve (3, 4, 5) in the end state in longitudinal direction.

5. sleeve according to claim 1, characterised in that it (3, 4, 5) has an inversely proportional wall thickness compared with a change of the outer diameter.

6. Sleeve according to claim 5, characterised in that as starting material a tube (15) is used, the outer diameter of which corresponds to the smallest outer diameter of the sleeve (3, 4, 5) in the end state.

7. Sleeve according to claim 1, characterised in that it is formed from a sleeve blank (15), which as end product contains several individual sleeves (3, 4, 5) lying behind one another axially and bordering onto one another, which after the end of the deformation are separated from the sleeve blank (15) on separating points (19, 23) determining the sleeve lengths.

8. Sleeve according to claim 7, characterised in that it is formed from a sleeve blank (22), which contains the individual sleeves (3, 4, 5) in a recurrent sequence (Figure 6).

9. Sleeve according to one of claims 1 to 8, characterised in that the starting material is a titanium alloy, preferably Ti 3 Al 2.5 V.

## Revendication

1. Manchon pour instrument médical, notamment de dentisterie, qui possède, lorsqu'on regarde dans la direction longitudinale, une configuration qui diffère de la section transversale et/ou du diamètre extérieur et/ou de la symétrie de révolution, caractérisé par le fait qu'il (3, 4, 5) est réalisé en un matériau convenant pour une déformation superplastique.

2. Manchon suivant la revendication 1, caractérisé par le fait qu'il (3, 4, 5) est formé par une tôle laminée précintrée avec une forme tubulaire.

3. Manchon suivant la revendication 1, caractérisé par le fait qu'il est prévu, comme matériau de départ, un tube (15) étiré sans soudure, convenant pour une déformation superplastique.

4. Manchon suivant la revendication 2 ou 3, caractérisé par le fait que le matériau de départ est précintré à l'état final dans la direction longitudinale, en fonction du contour du manchon (3, 4, 5).

5. Manchon suivant la revendication 1, caractérisé par le fait qu'il (3, 4, 5) possède une épaisseur de paroi inversement proportionnelle à la variation du diamètre extérieur.

6. Manchon suivant la revendication 5, caractérisé par le fait qu'on utilise, comme matériau de départ un tube (15), dont le diamètre extérieur correspond au diamètre extérieur le plus petit du manchon (3, 4, 5).

7. Manchon suivant la revendication 1, caractérisé par le fait qu'il est réalisé à partir d'une ébauche de manchon (15), qui contient, en tant que produit final, plusieurs manchons individuels (3, 4, 5), qui sont situés axialement les uns derrière les autres en étant contigus et qui, à la fin du formage, sont séparés de l'ébauche de manchon (15), au niveau de zones de séparation (19, 23) déterminant les longueurs des manchons.

8. Manchon suivant la revendication 7, caractérisé par le fait qu'il est formé d'une ébauche de manchon (22), qui contient les manchons individuels (3, 4, 5) selon une succession inverse (figure 6).

9. Manchon suivant l'une des revendications 1 à 8, caractérisé par le fait que le matériau de départ est un alliage de titane, de préférence du Ti 3 Al 2,5 V.

FIG 1

FIG 4

EP 0 281 813 B1

FIG 2

FIG 3

FIG 5

FIG 6